Europäisches Patentamt

European Patent Office

Office européen des brevets

(11) Veröffentlichungsnummer: **0 321 600 B1**

# (12) EUROPÄISCHE PATENTSCHRIFT

(45) Veröffentlichungstag der Patentschrift: **04.03.92**

(21) Anmeldenummer: **87119032.8**

(22) Anmeldetag: **22.12.87**

(51) Int. Cl.⁵: **G01P 1/02**, G01P 15/08

## (54) Akzelerometer.

(43) Veröffentlichungstag der Anmeldung:
**28.06.89 Patentblatt 89/26**

(45) Bekanntmachung des Hinweises auf die
Patenterteilung:
**04.03.92 Patentblatt 92/10**

(84) Benannte Vertragsstaaten:
**AT CH DE GB LI**

(56) Entgegenhaltungen:
**WO-A-86/00144       WO-A-86/03300
GB-A- 1 427 924       GB-A- 2 084 330
US-A- 3 075 099       US-A- 3 104 335
US-A- 3 629 773**

(73) Patentinhaber: **Kistler Instrumente AG
Eulachstrasse 22
CH-8408 Winterthur(CH)**

(72) Erfinder: **Kübler, John
72, Bramblewood Lane
E. Amherst, N.Y. 14051(US)**

(74) Vertreter: **Schmidt, Horst, Dr.
Siegfriedstrasse 8
W-8000 München 40(DE)**

# Beschreibung

Die Erfindung betrifft ein Akzelerometer, bestehend aus einem einen Sensor enthaltenden Grundkörper mit Steckeranschlussnippel und einer an einer Messobjektfläche befestigbaren Montagebasis, mit der der Grundkörper verbindbar ist. Die Erfindung betrifft ferner ein Verfahren zur akzelerometrischen Ausmessung des Messobjektes.

Es sind sowohl einachsige als auch mehrachsige Akzelerometer bekannt. Sie ermöglichen die Beschleunigungsmessung an einem bestimmten Messpunkt der Oberfläche eines Messobjektes in einer oder mehreren Achsrichtungen und sind zumeist mit dem Messobjekt fest verbunden. Wenn ein Oberflächenbereich eines Messobjektes akzelerometrisch ausgemessen werden soll, wird zunächst eine Anordnung von verschiedenen Messpunkten festgelegt. An jedem Messpunkt wurde dann bisher ein ein- oder mehrachsiges Akzelerometer fixiert, was mit einem entsprechend hohen Aufwand an Arbeit und Kosten verbunden war.

Zwar ist es aus der GB-A-1 427 924 bekannt, statt einer einteiligen Anordnung das Akzelerometer aus zwei lösbar miteinander zu verbindenden Teilen, nämlich dem eigentlichen Sensorteil und einer am Messobjekt zu befestigenden Montagebasis, auszubilden, so dass der Sensorteil nicht unmittelbar am Messobjekt befestigt werden braucht. Die Übertragung eines solchen Akzelerometers auf eine neue Messpunktanordnung oder auf einen anderen Oberflächenbereich ist jedoch weiterhin schwierig, weil die bekannten Sensoren nicht ohne weiteres aufgrund der elektrischen Anschlüsse von der jeweiligen Messfläche entfernt werden konnten. Ferner muss ein Akzelerometer von Zeit zu Zeit kalibriert werden. Auch hierbei erwiesen sich die bisherigen Akzelerometer als nachteilig, weil dadurch die Kalibrierung am montierten Akzelerometer erfolgen musste, während es für eine Kalibrierung wesentlich vorteilhafter ist, wenn diese in einer Kalibrierstation getrennt vom Messobjekt vorgenommen wird.

Der Erfindung liegt daher die Aufgabe zugrunde, ein Akzelerometer zu schaffen, das in einfacher Weise an einem Messobjekt montiert und von diesem demontiert werden kann und eine rationelle akzelerometrische Ausmessung eines Oberflächenbereiches erlaubt.

Diese Aufgabe wird erfindungsgemäss dadurch gelöst, dass der Steckeranschlussnippel des Grundkörpers in einen Stecker der Montagebasis unter Schaffung einer elektrischen Verbindung mit einer an der Montagebasis vorgesehenen Anschlussbuchse für ein Signalableitungskabel einschraubbar ist.

Das eigentliche Messteil, d.h. das Akzelerometer ist daher nicht unmittelbar fest mit der Messfläche, sondern lösbar mit einem Zwischenteil in Gestalt einer Montagebasis verbunden und demzufolge auf einfache Weise austauschbar. Auf einer Messfläche können mehrere Montagebasen angeordnet sein, wobei zur akzelerometrischen Ausmessung es nicht erforderlich ist, jede Montagebasis mit einem Akzelerometer zu versehen. Die Montagebasis kann gemäss einer Weiterbildung der Erfindung zur Aufnahme von Akzelerometern in mehr als einer Achsrichtung ausgebildet sein. Sie kann insbesondere eine kubische Form haben und mit zueinander im wesentlichen senkrecht stehenden Aufnahmebohrungen für die Akzelerometer versehen sein. Die Montagebasis wird mit der Messfläche in geeigneter Weise, z.B. durch Kleben oder Verschrauben, fest oder ebenfalls lösbar verbunden sein. Wenn erwünscht,kann die Montagebasis Schlüsseleingrifffflächen aufwiesen, um sie mittels eines Schlüsselwerkzeuges von der Messfläche abzuscheren.

Das Verfahren zur akzelerometrischen Ausmessung eines Objektes mittels einer Akzelerometeranordnung der vorgenannten Art ist durch die Merkmale des Patentanspruches 9 gekennzeichnet.

Die Erfindung wird nachfolgend anhand von Ausführungsformen und der Zeichnung näher erläutert.

| | |
|---|---|
| Fig. 1 | zeigt ein auf konventionelle Art verwendetes einachsiges Akzelerometer |
| Fig. 2 | zeigt ein einachsiges Akzelerometer mit einer Montagebasis, die auf der Messoberfläche aufgeklebt ist. |
| Fig. 3 | zeigt ein einachsiges Akzelerometer mit einer Montagebasis mit Schlüsselflächen |
| Fig. 4 | zeigt das Lösen eines Akzelerometers mit einem Schlüssel |
| Fig. 5a, b | zeigen Montagebasen, die auf der Messoberfläche aufgeschraubt werden können |
| Fig. 6 | zeigt eine kubische Montagebasis für ein dreiachsiges Akzelerometer |
| Fig. 7 | zeigt einen Querschnitt durch das in Fig. 6 dargestellte Akzelerometer. |

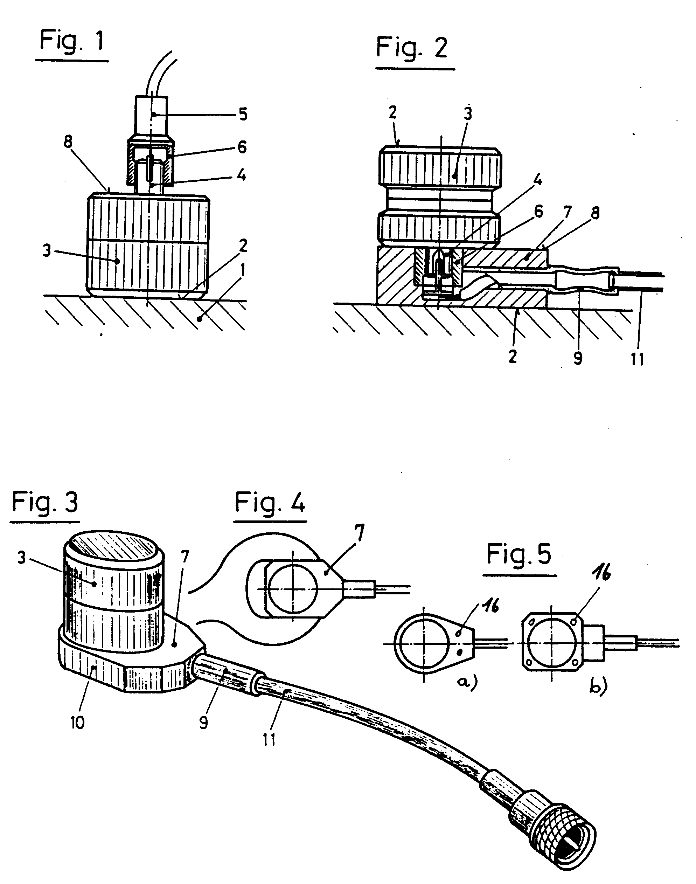

Fig. 1 zeigt ein herkömmliches Akzelerometer, wie es zur Messung von beispielsweise Vibrationsmessungen verwendet wird. Das Akzelerometer hat gegenüberliegende Montageflächen 2,8 und ist in bekannter Weise fest mit einer Messfläche 1, z.B. durch Kleben oder dgl., verbunden. Das Akzelerometer kann einen zylinderförmigen geriffelten Grundkörper 3 haben und ist mit einem Anschlussnippel 4 für den Stecker 5 eines Kabels zur Ableitung der Messsignale versehen. Dank der Gestaltung der Steckerverbindung können handelsübliche Kabel und Kabelstecker am Akzelerometer angeschlossen werden.

Fig. 2 und 3 zeigen ein Akzelerometer mit Grundkörper 3 gemäss Fig. 1, das jedoch erfindungsgemäss mittels eines in einer Montageplatte oder -basis 7 eingebauten Steckers 6 ähnlich dem vorerwähnten Kabelstecker 5 mit der Montagebasis 7 verbunden, insbesondere verschraubt ist. Die Montagebasis 7 kann ihrerseits in geeigneter Weise mit der Messfläche 1 fest verbunden, z.B. verklebt oder verschraubt sein und eine Anschlussbuchse 9 für ein Signalableitungskabel 11 tragen. Der Stecker 6 bildet zusammen mit dem Anschlussnippel 4 eine leicht lösbare Verbindung zwischen Akzelerometer und Montagebasis 7. Im Akzelerometer kann wenigstens teilweise eine Mess- und Auswerteelektronik integriert sein, was die Aufnahme von elektrischen Störsignalen verhindert.

Wie Fig. 3 und 4 weiter zeigen, können an der Montagebasis 7 ferner Schlüsseleingriffsflächen 10 vorgesehen sein, die mit einem geeigneten Schlüssel zusammenwirken können, um durch Aufbrechen der Klebverbindung die Montagebasis 7, wenn erwünscht, von der Messfläche 1 entfernen zu können.

Auf der Messfläche 1 können mehrere Montageplatten oder -basen 7 zur Aufnahme von Akzelerometern in einer bestimmten Anordnung aufgeklebt sein, um Beschleunigungsmessungen an verschiedenen Messpunkten und/oder in verschiedenen Richtungen durchführen zu können. Die Montagebasen können dabei, wie erwähnt, ohne weiteres von der Messoberfläche entfernt und in einer neuen Anordnung wieder damit fest verbunden bzw. verklebt werden. Auch ist eine leichte Entfernung der Akzelerometer, z.B. zum Zwecke der Kalibrierung, möglich.

Fig. 5a zeigt anstelle einer Klebverbindung eine Schraubverbindung zwischen der Montagebasis 7 und der Messoberläche 1. Zu diesem Zweck kann die Montagebasis Löcher 16 aufweisen, durch die nicht gezeigte Befestigungsschrauben durchgeführt werden können. Die Schraubverbindung erlaubt eine besonders leichte Trennung der Montagebasis von der Messfläche. Fig. 5b zeigt eine modifizierte Ausführung der Anordnung nach Fig. 5a mit vier in der Montagebasis 7 vorgesehenen Löchern 16 zur Durchführung von Befestigungsschrauben. Die Montagebasis 7 kann je nach Verwendung unterschiedlich gestaltet sein, sofern sichergestellt ist, dass die Montage und Demontage des Akzelerometers in der gewünschten einfachen Weise erfolgen.

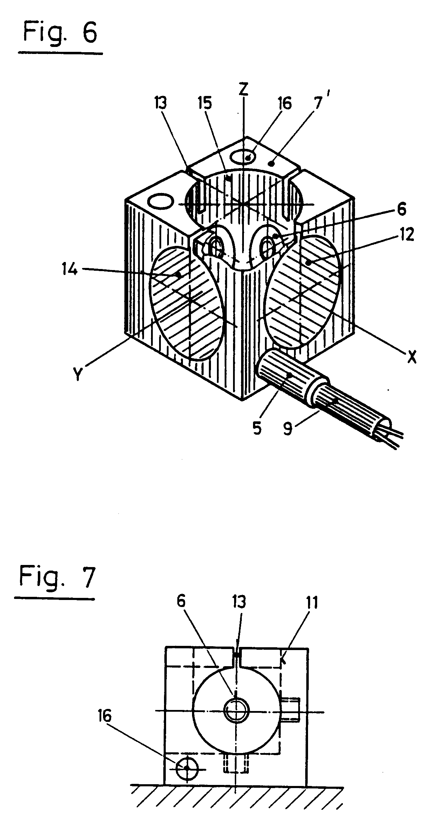

Fig. 6 zeigt in perspektivischer Ansicht eine kubische Montagebasis 7′ zur Aufnahme von Akzelerometern in drei zueinander senkrecht stehenden Achsrichtungen X, Y, Z. In Fig. 6 tragen gleiche oder ähnliche Teile wie in Fig. 2 gleiche Bezugszeichen. Mit 12 sind drei Bohrungen zur Aufnahme der nicht dargestellten Akzelerometer angedeudet. Der Einbau wird durch die in Fig. 1 und 2 gezeigte zylindrische Form des Akzelerometergrundkörpers 3 erleichtert. Die geriffelte Oberfläche des Grundkörpers 3 erleichtert dabei die Fixierung der Akzelerometer in den Aufnahmebohrungen 12. Mit 13 sind vorgesoannte Schlitze in der Montagebasis 7′ angedeutet, die einen sicheren Halt der Akzelerometer in den Aufnahmebohrungen gewährleisten. Löcher 16 in der Montagebasis 7′ dienen zur Durchführung nicht dargestellter Befestigungsschrauben, um die Montagebasis 7′ an der Messfläche 1 zu befestigen. Aus Fig. 6 geht ferner der innere Aufbau der dreiachsigen Variante der Montagebasis hervor und insbesondere sind die eingebauten Stecker 6 zur schraubmässigen Eingriffnahme mit den Steckeranschlussnippeln 4 der Akzelerometer erkennbar. Die in den einzelnen Akzelerometern bei der Messung entstehenden Signale können gemäss Fig. 3 durch ein einziges Kabel mit Kabelstecker 5 und Anschlussbuchse 9 nach aussen abgeführt werden.

Auch bei der in Fig. 6 dargestellten dreiachsigen Ausführungsform der Montagebasis ist gewährleistet, dass die Akzelerometer leicht in die Montagebasis montiert und demontiert werden können. Auch hier geschieht dies durch eine leicht lösbare elektromechanische Verbindung in der Form eines Schraubensteckers. Auf diese Weise kann ein Akzelerometer leicht in einer Achsrichtung X, Y oder Z in die Montagebasis 7 eingeführt und die Beschleunigung in dieser Richtung gemessen werden, worauf das Akzelerometer wieder gelöst und in einer anderen Achsrichtung wieder eingeschoben wird, worauf die Beschleunigung in der neuen Richtung gemessen wird. Die Montagebasis 7 kann so dimensioniert sein,dass nur ein einzelnes Akzelerometer darin Platz findet. Sie kann also klein gehalten werden. Die Montagebasis 7 kann wiederum auf die nicht dargestellte Messoberfläche aufgeklebt oder aufgeschraubt werden. Fig. 7 zeigt einen Querschnitt durch die in Fig. 6 dargestellte kubische Montagebasis, wobei die Buchse 6 für die Aufnahme des Steckernippels 4 des Akzelerometers deutlich sichtbar ist. Sichtbar ist auch das Kabel 11 und der Schlitz 13, welcher eine feste Halterung des Akzelerometers in der Aufnahmebohrung 12 wegen der Vorspannung der Randpartien der Montagebasis erlaubt.

Das erfindungsgemässe Akzelerometer zeichnet sich dadurch aus, dass es über ein Zwischenteil (Montagebasis) mit der Messoberfläche verbunden ist, wobei der eigentliche Messteil (Akzelerometer) auf einfache Weise an das Zwischenteil montiert und von ihm demontiert werden kann. Dadurch wird es möglich, einen akzelerometrisch auszumessenden Flächenbereich an vorausbestimmten Messpunkten, wahlweise mit ein-oder mehrachsigen Montagebasen zu versehen (durch Kleben oder Schrauben). Zur akzelerometrischen Ausmessung dieses Flächenstückes ist es nun nicht notwendig, jede Montagebasis mit einem Akzelerometer zu versehen. Je nach Messziel und -methode kann die Anzahl der Akzelerometer viel kleiner sein als die Anzahl der Messpunkte, im Extremfall könnte man die Messung mit einem einzigen Akzelerometer durchführen. In einer dreiachsigen Montagebasis kann beispielsweise durch Einführen eines Akzelerometers zuerst die Beschleunigung in der X-Richtung bestimmt werden, dann kann das Akzelerometer aus der Montagebasis herausgenommen und in die Aufnahmebohrung für die Y-Richtung eingeführt werden und die Beschleunigung (bei Vibrationen: Beschleunigungsamplitude) in der Y-Richtung gemessen werden etc. Dieses schrittweise Verfahren in der akzelerometrischen Vermessung einer Messfläche erweist sich als sehr rationell, besonders weil mit einer reduzierten Anzahl von Akzelerometern gearbeitet werden kann.

Wenn eine neue Anordnung von Messpunkten besetzt werden soll, so sind die auf die Messoberfläche geklebten oder geschraubten Montageplatten leicht ablösbar, beispielsweise mit einem Schlüssel, und an neuen Messpunkten leicht wieder montierbar.

Wie bereits eingangs erwähnt, erleichtert die einfache Montage und Demontage eines Akzelerometers oder seines Messteiles auch die Kalibrierung.

**Patentansprüche**

1. Akzelerometer, bestehend aus einem einen Sensor enthaltenden Grundkörper mit Steckeranschlussnippel und einer an einer Messobjektfläche befestigbaren Montagebasis (7), mit der der Grundkörper (3) verbindbar ist, dadurch gekennzeichnet, dass der Steckeranschlussnippel (4) des Grundkörpers (3) in einen Stecker (6) der Montagebasis (7) unter Schaffung einer elektrischen Verbindung mit einer an der Montagebasis vorgesehenen Anschlussbuchse (9) für ein Signalableitungskabel (11) einschraubbar ist.

2. Akzelerometer nach Anspruch 1, dadurch gekennzeichnet, dass die Montagebasis (7) zur Aufnahme von Akzelerometergrundkörpern (3) in mehr als einer Achsrichtung ausgebildet ist.

3. Akzelerometer nach Anspruch 1 oder 2, dadurch gekennzeichnet, dass die Montagebasis (7) auf der Messobjektfläche aufklebbar oder aufschraubbar ist.

4. Akzelerometer nach Anspruch 1, 2 oder 3, dadurch gekennzeichnet, dass die Montagebasis (7) mit Schlüsseleingriffsflächen (10) versehen ist.

5. Akzelerometer nach einem der vorhergehenden Ansprüche, dadurch gekennzeichnet, dass die Montagebasis (7) eine kubische Form hat und zueinander im wesentlichen senkrecht stehende Aufnahmebohrungen (12) für die Aufnahme von Akzelerometergrundkörpern (3) besitzt.

6. Akzelerometer nach einem der vorhergehenden Ansprüche, dadurch gekennzeichnet, dass der Akzelerometergrundkörper (3) eine zylindrische Form mit geriffelter Oberfläche hat.

7. Akzelerometer nach Anspruch 5, dadurch gekennzeichnet, dass die kubische Montagebasis (7) vorgespannte Schlitze (13) aufweist, um einen festen Sitz der Grundkörper (3) in den Aufnahmebohrungen (12) zu erhalten.

8. Akzelerometer nach einem der vorhergehenden Ansprüche, dadurch gekennzeichnet, dass eine Mess- und Auswerteelektronik wenigstens teilweise in den Grundkörper (3) des Akzelerometers integriert ist.

9. Verfahren zur akzelerometrischen Ausmessung eines Objektes mit einem Akzelerometer nach einem der vorhergehenden Ansprüche, dadurch gekennzeichnet, dass das Messobjekt mit einer Mehrzahl von Montagebasen (7) bestückt wird, dass durch schrittweisen Einbau der Grundkörper (3) an einem Messpunkt in verschiedenen Achsrichtungen die Richtung der Hauptschwingungsamplitude festgestellt wird, und dass durch sukzessiven Einbau einer kleinen Anzahl Grundkörpern (3) an vielen verschiedenen Messpunkten ein ganzer Oberflächenbereich des Messobjektes vermessen wird.

**Claims**

1. Accelerometer consisting of a basic body containing a sensor and provided with a plug connection nipple, and a mounting base (7) fixable on a measuring object surface and joinable to the basic body (3), characterized by the plug connection nipple (4) of the basic body (3) being screwable into a plug (6) of the mounting base (7), creating an electrical connection with a socket (9) for a signal conducting cable (11) provided on the mounting base.

2. Accelerometer according to claim 1, characterized by the mounting base (7) being designed to take basic bodies (3) of accelerometers in more than one axial direction.

3. Accelerometer according to claim 1 or 2, characterized by the mounting base (7) being gluable or screwable on the measuring surface.

4. Accelerometer according to claim 1, 2 or 3, characterized by the mounting base (7) being provided with wrench engaging flats (10).

5. Accelerometer according to one of the foregoing claims, characterized by the mounting base (7) having a cubic form and holes (12) essentially at right angles to each other for accommodating basic bodies (3) of accelerometers.

6. Accelerometer according to one of the foregoing claims, characterized by the basic body (3) of the accelerometer having a cylindrical form with fluted surface.

7. Accelerometer according to claim 5, characterized by the cubic mounting base (7) having preloaded slots (13) to obtain a firm fit of the basic bodies (3) in the mounting holes (12).

8. Accelerometer according to one of the foregoing claims, characterized by measuring and evaluation electronics integrated at least partly in the basic body (3) of the accelerometer.

9. Procedure for the accelerometric measurement of an object with an accelerometer according to one of the foregoing claims, characterized by the measuring object being fitted with a number of mounting bases (7), so that the direction of the main vibration amplitude is ascertained by fitting the basic bodies (3) in stages in different axial directions at one measuring point, and an entire surface zone of the measuring object is measured by successively fitting a small number of basic bodies (3) at many different measuring points.

**Revendications**

1. Accéléromètre constitué d'un socle contenant un détecteur avec un raccord à fiche et une base de montage (7) pouvant être fixée à la surface de l'objet à mesurer, qui peut être assemblé au socle (3), caractérisé en ce que le raccord à fiche (4) du socle (3) peut être vissé dans une fiche (6) de la base de montage (7), en réalisant une liaison électrique avec une borne de raccordement (9) prévue sur la base de montage, pour un câble de dérivation de signal (11).

2. Accéléromètre selon la revendication 1, caractérisé en ce que la base de montage (7) est disposée pour recevoir des socles d'accéléromètre (3) dans plus d'une direction axiale.

3. Accéléromètre selon la revendication 1 ou 2, caractérisé en ce que la base de montage (7) peut être collée ou vissée sur la surface de l'objet à mesurer.

4. Accéléromètre selon la revendication 1, 2 ou 3, caractérisé en ce que la base de montage (7) est pourvue de surfaces d'action à clé (10).

5. Accéléromètre selon l'une des revendications précédentes, caractérisé en ce que la base de montage (7) a une forme cubique et possède des alésages (12) disposés essentiellement verticalement, destinés à recevoir les socles d'accéléromètre (3).

6. Accéléromètre selon l'une des revendications précédentes, caractérisé en ce que le socle d'accéléromètre (3) a une forme cylindrique avec une surface cannelée.

7. Accéléromètre selon la revendication 5, caractérisé en ce que la base de montage cubique (7) présente des fentes (13) précontraintes afin de conférer une assise solide au socle (3) dans les alésages de placement (12).

8. Accéléromètre selon l'une des revendications précédentes, caractérisé en ce qu'un système électronique de mesure et d'évaluation est intégré au moins partiellement dans le socle (3) de l'accéléromètre.

9. Procédé de mesure accélérométrique d'un objet avec un accéléromètre, selon l'une des revendications précédentes, caractérisé en ce que l'objet à mesurer est équipé de plusieurs bases de montage (7), que la direction de l'amplitude des vibrations principales est déterminée par montages successifs des socles (3) en un point de mesure dans différentes directions axiales et que, par montages successifs d'un faible nombre de socles (3) en différents points de mesure, on réalise des mesures sur toute la surface de l'objet à mesurer.

Fig. 1

Fig. 2

Fig. 3

Fig. 4

Fig. 5

a)

b)

## Fig. 6

## Fig. 7